# EUROPEAN PATENT SPECIFICATION

(11) **EP 4 536 446 B1**
(45) Date of publication and mention of the grant of the patent: **13.05.2026**
(21) Application number: 23736464.1
(22) Date of filing: 12.06.2023
(51) Int. Cl.: B25J 9/10, B25J 15/00, B25J 15/02

(54) **UNDERACTUATED ROBOTIC HAND**
UNTERBETÄTIGTE ROBOTERHAND
MAIN ROBOTIQUE SOUS-ACTIONNÉE

(30) Priority: 13.06.2022 IT 202200012392
(43) Date of publication of application: 16.04.2025
(73) Proprietor: BIONIT LABS SRL, 73010 Soleto (LE) (IT)
(72) Inventor: ZAPPATORE, Giovanni Antonio, 73100 Lecce (LE) (IT); LONGO, Alberto, 73026 Torre Specchia Ruggeri, Melendugno (LE) (IT); DIMASTROGIOVANNI, Mauro, 73016 San Cesario di Lecce (LE) (IT); TINELLA, Domenico, 73013 Galatina (LE) (IT); ACCOGLI, Andrea, 73100 Lecce (LE) (IT)
(74) Representative: Conversano, Gabriele
(86) International application number: PCT/IB2023/056037
(87) International publication number: WO 2023/242709

(56) References cited:
- WO-A1-2004/026540
- CN-A- 105 583 839
- CN-A- 109 227 583
- JP-A- 2001 277 175
- US-A- 4 986 723
- US-A- 5 447 403
- US-A1- 2015 182 353
- US-A1- 2020 047 351

## Description

### INTRODUCTION

The present Patent application for industrial invention relates to an underactuated robotic hand which is highly robust, both in terms of capability to resist to outer stresses (compliance) and degree of resistance to the penetration of liquid and solid particles. In particular, the present application relates to a control mechanism of the four aligned fingers of an anthropomorphic hand.

### TECHNICAL FIELD

The definition "robotic hand" refers to a device with anthropomorphic inspiration. The robotic hands proposed in literature can be divided in three main categories according to the number of their degrees of freedom (DOF) and of their degrees of actuation (DOA): fully actuated, underactuated and redundantly actuated.

Fully actuated robotic hands have a number of degrees of freedom equal to the number of degrees of actuation. Underactuated robotic hands have a number of degrees of freedom higher than the number of degrees of actuation. Redundantly actuated robotic hands have a number of degrees of freedom lower than the number of degrees of actuation.

Fully actuated robotic hands, while capable of efficient grasping, are extremely complex, and this leads to high costs and an overall lack of robustness. And this is especially true for redundantly actuated robotic hands. This is the main reason why, recently, the interest in the design of underactuated robotic hands has increased. The basic idea of the underactuation in the robotic grasping is to use a mechanic system that, by means of passive elements as springs and mechanical limits, can automatically adapt to the specific shape of the grasped object, so that the number of required actuators is lower than the number of DOF. This results in simpler control systems and in a reduction of the manipulator costs.

One of the manners to obtain an underactuated mechanism is to use differential systems which automatically distribute an input to several outputs, the ratio between such outputs being defined by their kinematic state and by design parameters of the mechanism itself. In order to obtain more than two outputs, several differential modules can be used, configured in series or in parallel according to the needs, each one adding 1 DOF to the system. So, (n - 1) differential stages are generally needed to obtain n outputs.

### PRIOR ART

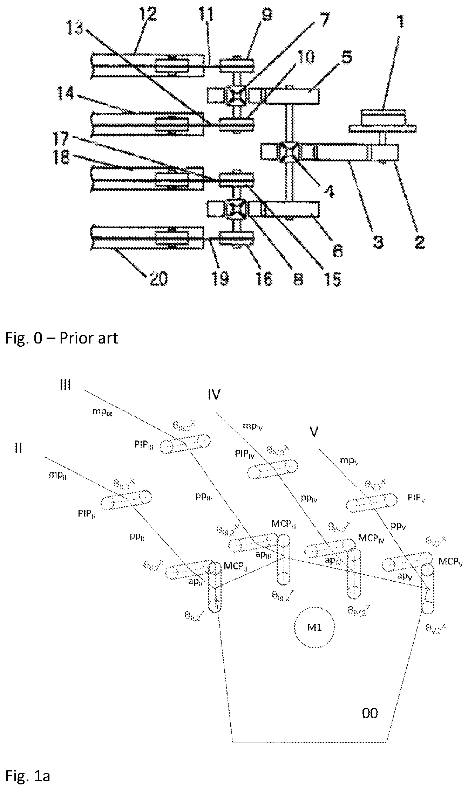

In particular, at the state of the art, there are known underactuated robotic hands which use one or more differential stages to transmit motion to the various fingers. One example in described in document KR100848170. Another example is described in JP2001277175, wherein a robotic hand is described, whose kinematic scheme, extracted by said document, is shown in figure 0. Documents US 2020/047351, US 5 447 403, WO 2004/026540, US 2015/182353, CN 105 583 839, US 4 986 723 and CN 109 227 583 disclose examples of robotic multi-articulated fingers and of robotic hands with multi-articulated fingers comprising differential gears for the under-actuation of the hand.

### TECHNICAL PROBLEM

Yet, it remains unsolved the problem to provide an underactuated robotic hand which allows a simple actuation of all the aligned fingers, which is structurally robust and which allows a simple replacement of the fingers, for example in case of failure, and adjustment of the mechanism of the same, and which is also highly resistant to mechanical stresses and to the penetration of liquids and powders, so that the need of maintenance interventions during the useful life of the device is reduced.

Another technical problem, unsolved at the state of the art, is to provide a highly underactuated robotic hand, with a mechanism based on gears and toothed belts and without using unidirectional actuation means, such as tendons, so to have a highly repeatable behavior and so easily controllable by the user.

Yet, another technical problem, solved by the present invention, is to provide an anthropomorphic hand with dimensions and weight comparable to the ones of a normal limb, by reducing the number of active components (motors) so to reduce the weight of the device and to increase its usability.

Another problem solved by the hand according to the present invention is to provide an underactuated robotic hand, whose mechanism allows to imitate the human hand functionality as accurately as possible, and which allows in particular to distribute the tightening torque differently among the various fingers, as it occurs in a human hand.

Finally, a technical problem solved by the present invention is to provide an underactuated robotic hand, whose fingers phalanges dimensions can be modified without needing a re-design of the mechanism and without modifying the grasping behavior of the device.

### BRIEF DESCRIPTION

The present invention realizes the prefixed aims since it is a mechanism for moving the four aligned fingers (2, 3, 4, 5) of an anthropomorphic hand, comprising a motor (M1) and three differential stages configured to transmit motion from said motor (M1) to said aligned fingers (2, 3, 4, 5), wherein said differential stages are bevel gear differential stages, each comprising a train carrier (14, 24, 34) and two sun gears (15, 16, 25, 26, 35, 36); said differential stages are arranged so that the axes of rotation of said train carriers (14, 15, 16) are aligned; said motor (M1) is configured to directly move the train carrier (14, 24, 34) of one of said differential stages by means of a coupling between a worm screw (R1) on the motor and a crown on the train carrier (14, 24, 34) of one of said differential stages; said differential stages are configured so that at least one of the sun gears of said differential stage moved by the motor M1 is integral to the train carrier of a second differential stage adjacent thereto; said differential stages are configured to move said four aligned fingers (2, 3, 4, 5) by means of four of said sun gears (15, 16, 25, 26, 35, 36); the sun gear not engaged in the movement of said aligned fingers and not integral to the train carrier of said second differential stage is integral to the train carrier of said third differential stage, wherein the differential stage moved by said motor (M1) is a lateral stage of said three aligned differential stages, and wherein said lateral differential stage has a sun gear (26) integral to the train carrier (14) of the differential stage adjacent thereto and the other sun gear (25) configured to control the movement of the index finger of said anthropomorphic hand.

### DESCRIPTION OF THE FIGURES

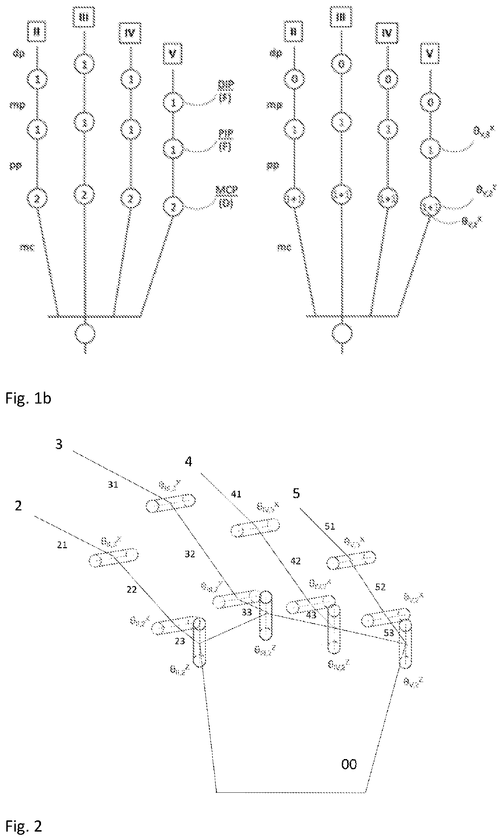

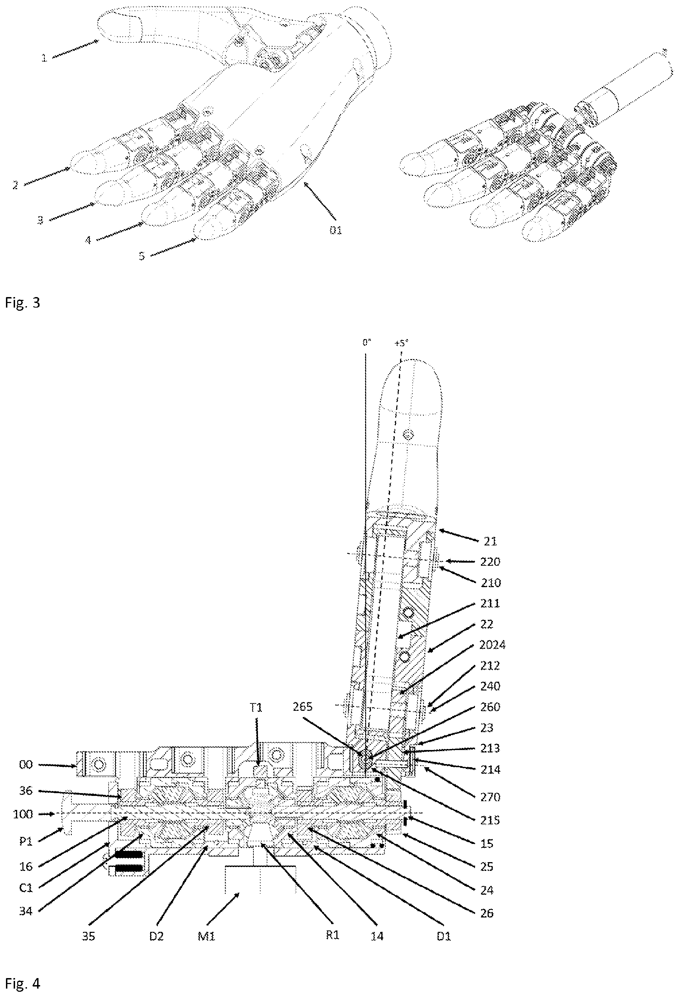

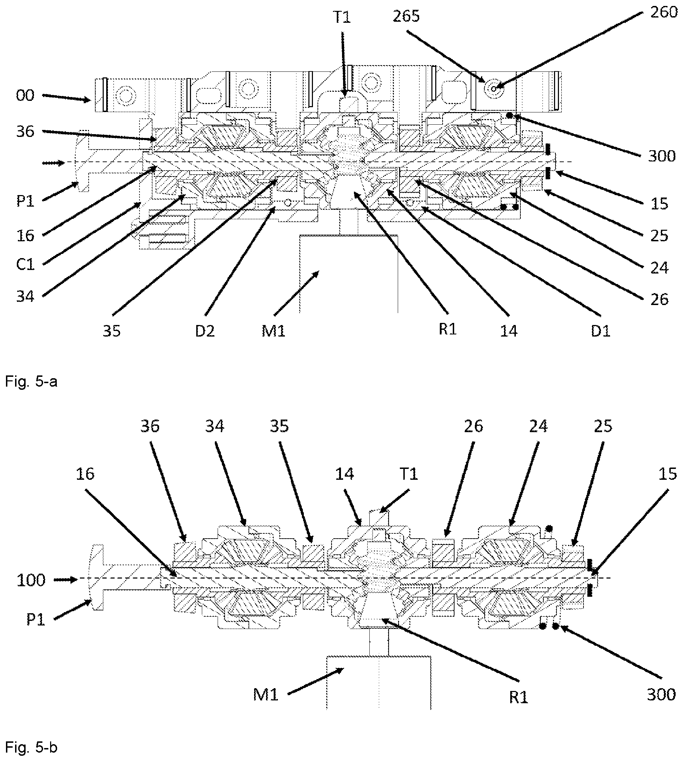

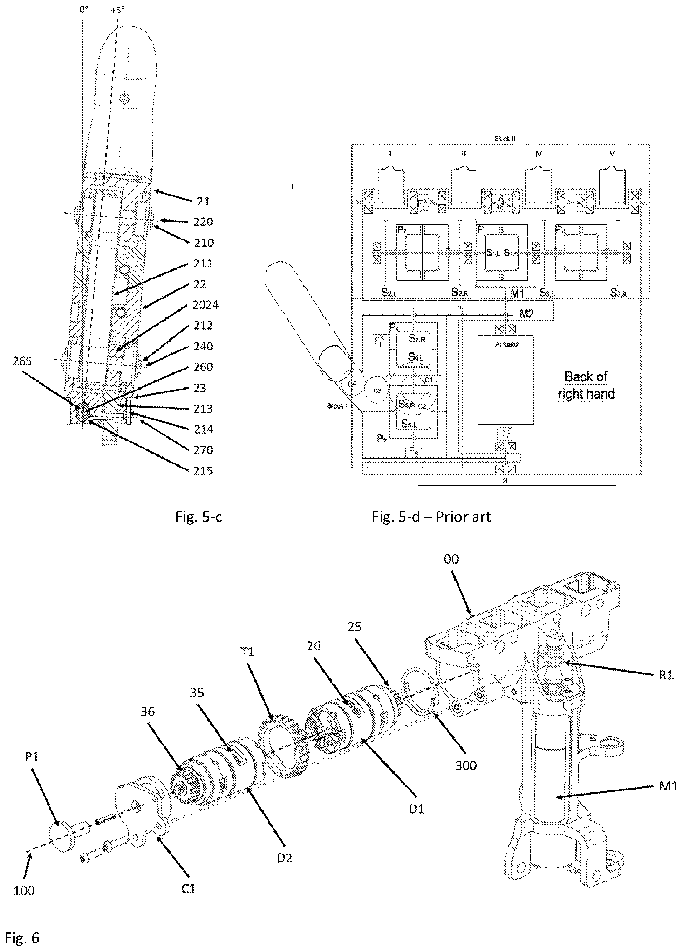

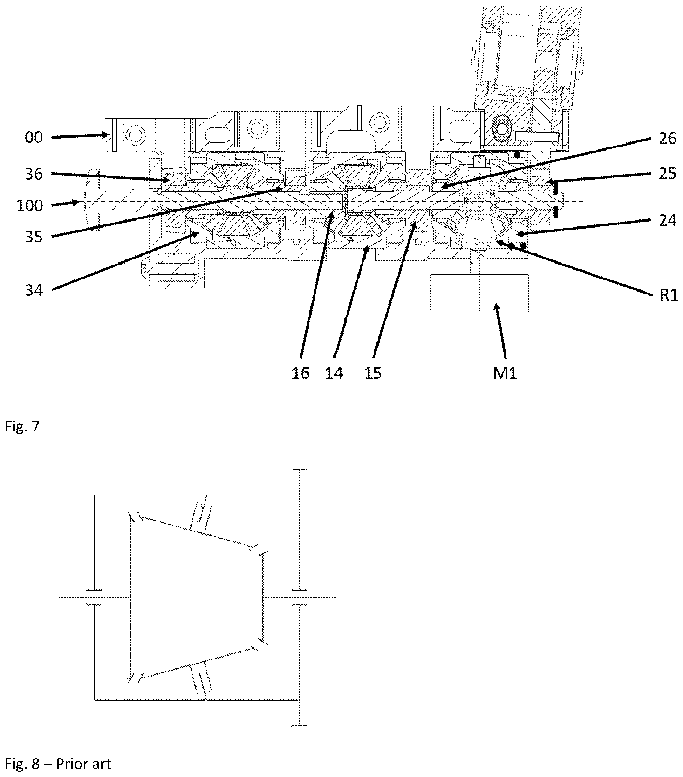

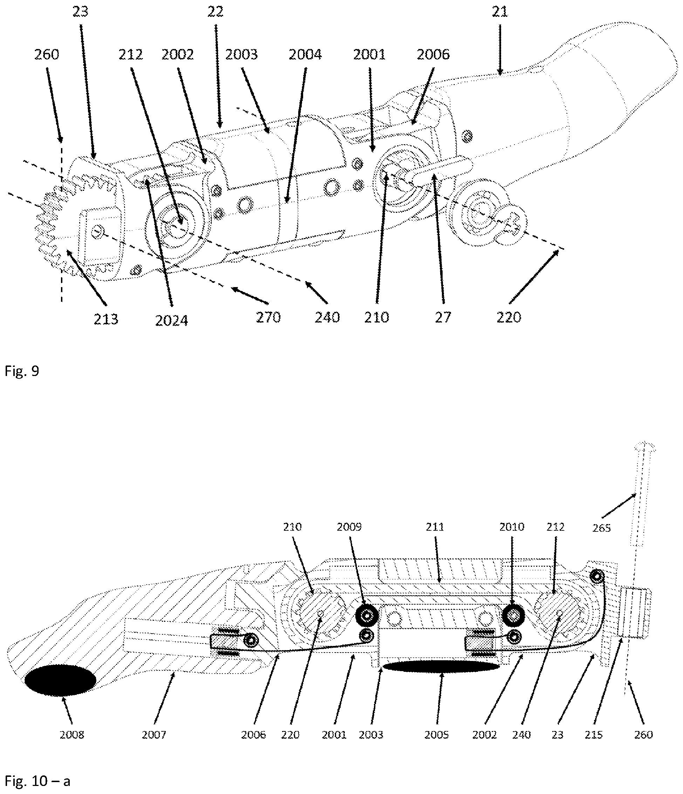

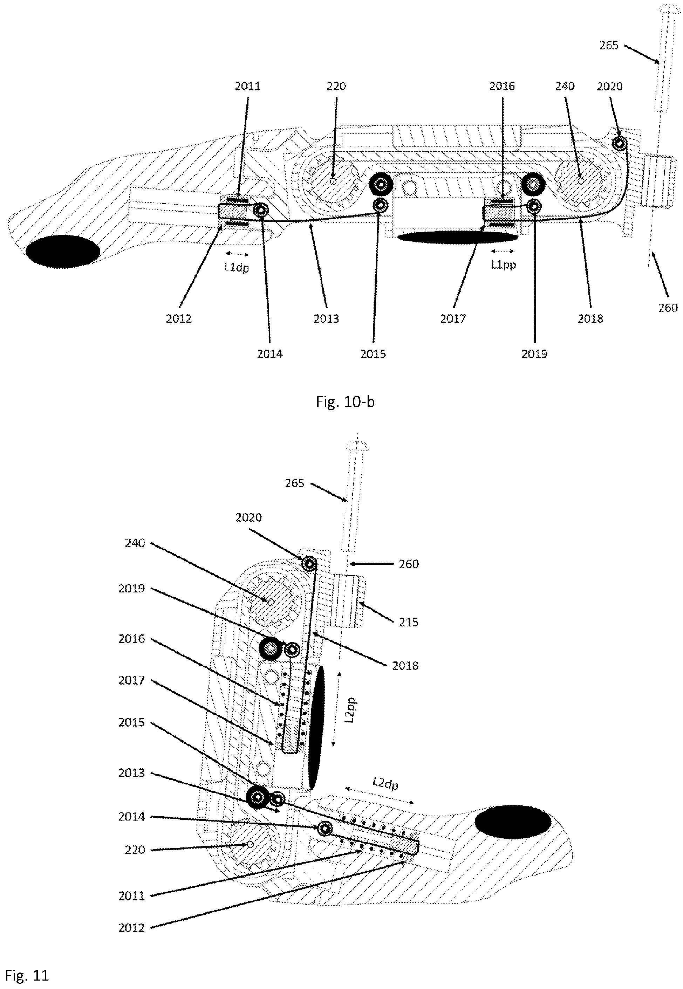

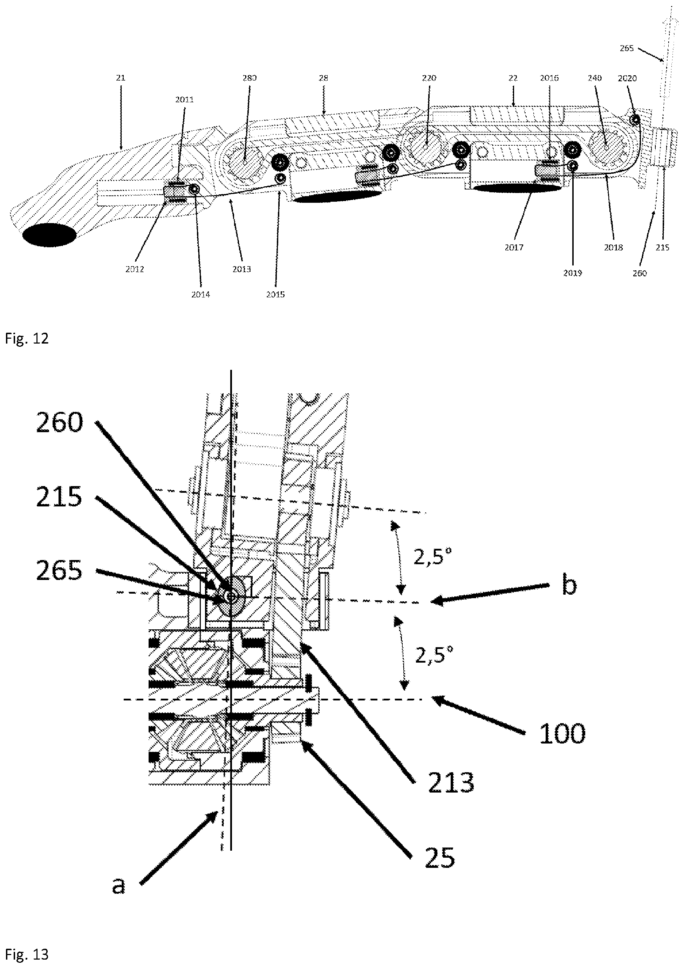

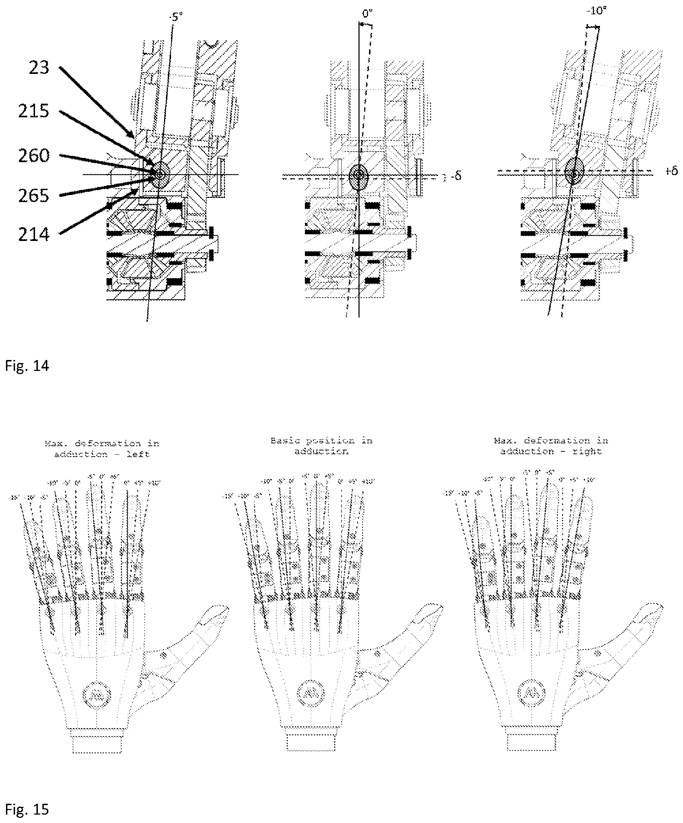

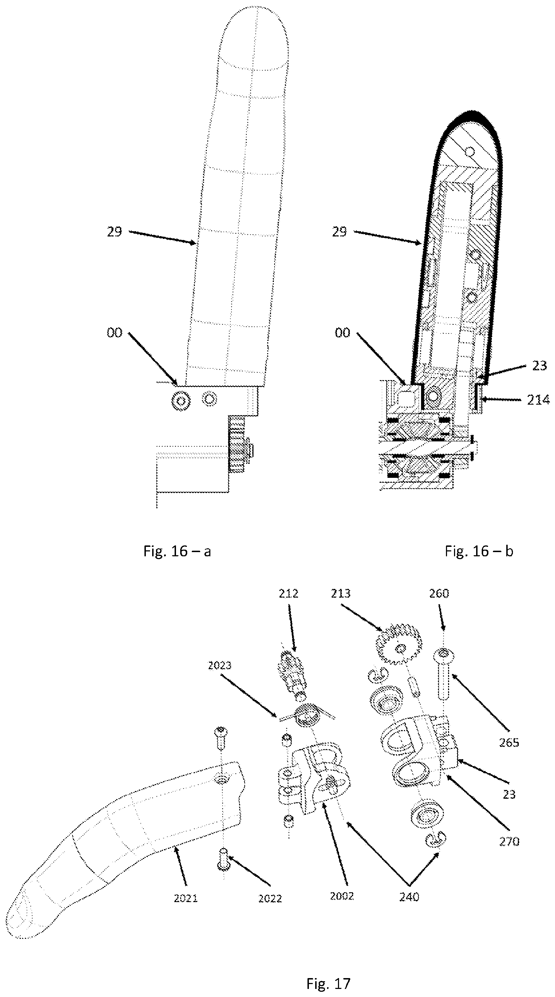

Figure 0 shows an embodiment of a robotic hand known at the state of the art; figure 1-a shows a schematic view of a preferred embodiment of the robotic hand according to the invention; figure 1b shows schemes of degrees of freedom of the human hand (left) and robotic hand (right) according to the invention with reference to the aligned fingers; figure 2 shows a schematic view of a preferred embodiment of the robotic hand according to the invention; figure 3 shows a schematic view of the robotic hand not according to the invention, with and without the cover applied; figure 4 shows a section view of the differential stages of the hand not according to the invention with one of the aligned fingers; figures 5-a and 5-b show two section views of the differential stages of the hand not according to the invention, with and without the frame where they are installed; figure 5-c shows a section view of a finger; figure 5-d shows a kinematic scheme known at the state of the art; figure 6 shows an exploded view of the assembly of the differential stages not according to the invention; figure 7 shows a detail of an embodiment of the transmission of motion from the motor to the differential stages, with the motor arranged in lateral position; figure 8 shows the kinematic scheme of an embodiment of bevel gear differential stages, known at the state of the art; figure 9 shows a view of a preferred embodiment of the finger according to the invention with the key used for the distal phalanges coupling highlighted; figures 10-a, 10-b and 11 show views of a preferred embodiment of the index finger according to the invention; figure 12 shows example views of an embodiment of the finger with three phalanges; figure 13 shows a particular of the coupling of the finger to the frame; figure 14 shows passive adduction and abduction movements of one finger, with elastic elements deformation; figure 15 shows examples of passive adduction and abduction angles of the fingers according to the invention; figure 16 shows a preferred embodiment of the little gloves for the finger according to the invention.

### DETAILED DESCRIPTION

As it is clear from the appended figures - see for example figure 1-a - the prosthesis according to the invention comprises 4 fingers, respectively corresponding to the index finger (II), middle finger (III), ring finger (IV) and little finger (V) of the human hand.

Each of said fingers comprises preferably a middle-distal phalanx (mp_{II}, mp_{III}, mp_{IV} and mpᵥ, respectively for index finger, middle finger, ring finger and little finger), a proximal phalanx (pp_{II}, pp_{III}, pp_{IV} and pp_{V}, respectively for index finger, middle finger, ring finger and little finger) and an appendix (ap_{II}, ap_{III}, ap_{IV} and ap_{V}, respectively for index finger, middle finger, ring finger and little finger).

In another embodiment, described in the following in the present document, each finger comprises a phalanx and an appendix instead of the just cited two phalanges and one appendix.

Distal and proximal phalanges are interconnected to each other through an interphalangeal joint PIP (PIP_{II}, PIP_{III}, PIP_{IV} and PIP_{V}, respectively for index finger, middle finger, ring finger and little finger). It is to be specified that the interphalangeal joint is realized by a rotoidal torque, i.e. a connection which allows only relative rotation but not translation.

Proximal phalanges are interconnected at appendixes by the first one of two axes of rotation of a metacarpophalangeal joint (MCP_{II}, MCP_{III}, MCP_{IV} and MCP_{V}, respectively for index finger, middle finger, ring finger and little finger) which allows a rotation in the flexion-extension plane. The appendixes (ap_{II}, ap_{III}, ap_{IV} and ap_{V}) are then interconnected to a frame (00) - which corresponds to the palm of the human hand - by the second one of the two axes of rotation of the same metacarpophalangeal joint, which allows a rotation in the abduction-adduction plane.

It is to be specified that the metacarpophalangeal joint, which in the human hand is a saddle-shaped joint and allows the relative rotation of two components of two different axes perpendicular to each other, in the hand according to the invention is realized by rotoidal torques, which respectively connect:
- frame (00) and appendix (fingers adduction/abduction movement),
- appendix and proximal phalanx (second rotation, relative to flexion/extension movement),
to each other.

Moreover, preferably, the hand according to the invention comprises a finger corresponding to the thumb (I), a metacarpus and a relative actuation mechanism.

In the embodiment described in the following, the movement mechanism of the four aligned fingers has 12 degrees of freedom (DOF), each one indicated by a value of the variable θ_{i,j}^{k}. This variable refers to the rotation of the j^{th} joint (j = 1 or j = 2 or j = 3, respectively for TM, MCP and PIP) relative to the i^{th} finger (i = I, II, III, IV, V, respectively for thumb, index finger, middle finger, ring finger and little finger); the apex k refers instead to the angles of flexion-extension (k = X) or abduction-adduction (k = Z).

Of these 12 degrees of freedom: 8 are controllable actively and bidirectionally by means of an underactuated mechanism, controlled by only one motor (M1) positioned in the palm 00. They are 4 DOF corresponding to the flexion-extension movements of the MCP joints of the fingers II-V, obtained with rotoidal joints (θ_{II,2}^{x}, θ_{III,2}^{x}, θ_{IV,2}^{x} and θ_{v,2}^{x}) and 4 DOF corresponding to the flexion-extension movements of the PIP joints of the fingers II-V, obtained with rotoidal joints (θ_{II,3}^{x}, θ_{III,3}^{x}, θ_{IV,3}^{x} and θ_{V,3}^{x}); 4 are passive, corresponding to the abduction-adduction movement of the MCP joints of the fingers II-V, obtained with rotoidal joints (θ_{II,2}^{z}, θ_{III,2}^{z}, θ_{IV,2}^{z} and θ_{V,2}^{z}), which can adapt in certain limits to the shape of the grasped object - as it will be explained better in the following - but cannot be controlled actively.

The hand according to the invention comprises also an electronic control board configured to receive in input control signals (preferably but not limitingly detected by means of myoelectric sensors applied on the skin of the user) and to control the motors provided as a function of said control signals.

Moreover, preferably, the device according to the invention comprises a plurality of elastic elements (214, 314, 414, 514) - shown for example in figures 4 and 16 - interposed among the elements in relative rotation of the joints MCP_{II}, MCP_{III}, MCP_{IV} and MCP_{V} at passive degrees of freedom between appendixes and frame (θ_{II,2}^{z}, θ_{III,2}^{z}, θ_{IV,2}^{z} and θ_{V,2}^{z}). The function of said elastic elements is to deaden potential blows received by the aligned fingers from II to V.

Moreover, preferably, the device according to the invention comprises also elastic elements (215, 315, 415, 515) - shown for example in figures 12 and 13 - interposed between the axis of rotation at passive degrees of freedom (θ_{II,2}^{z}, θ_{III,2}^{z}, θ_{IV,2}^{z} and θ_{V,2}^{z}) and the appendixes, configured so to allow the temporaneous disengagement of the mechanism of the fingers with respect to the frame (00), in order to deaden potential blows received by the fingers II - V. Preferably, the frame comprises also a cover (01), which serves to protect the mechanism and said inner electronic board and to improve the appearance of the prosthesis, making it resemble the one of a real human hand as accurately as possible.

It is now described a preferred embodiment of the mechanism according to the invention. Due to the complexity of the mechanism, it is considered useful to introduce the criteria according to which nomenclature was assigned.

The elements of the three bevel gear differential stages are indicated with a reference number made up of a number between 1 and 3 (identifying the stage) followed by a number identifying the specific element (number 4 for the train carrier, number 5 for the left sun gear, number 6 for the right sun gear). So, for example, the train carrier of the third stage is indicated with the reference (34), while the left sun gear of the second stage is indicated with the reference (25).

Phalanges are indicated with references made up of a number between 1 and 5 identifying the finger, followed by a number identifying the phalanx (number 1 for the distal phalanx, 2 for the proximal phalanx, 3 for the appendix). Therefore, for example, the distal phalanx of the ring finger is indicated with the reference (41), the appendix of the middle finger with the reference (33), and so on.

Moreover, for each finger, the first pulley and the toothed belt connecting the next pulley are indicated with the reference of the finger followed by 10 and 11. Similarly, the second pulley is indicated with the reference of the finger followed by 12. The second pulley of the middle finger, for example, is indicated with the reference (312). Moreover, for each finger, 20 and 40 indicate respectively the axes of rotation x (flexion/extension) between distal phalanx and proximal phalanx and between proximal phalanx and appendix, and 60 indicates the axis of rotation z (abduction/adduction) between appendix and frame. Thus, the axis x of the little finger, of rotation between proximal phalanx and appendix, according to the criterion, is indicated with (540), while the axis z of the index finger, of rotation between appendix and frame, is indicated with the reference (260).

After specifying the assigning criteria of the numerical references, it is now possible to describe a preferred embodiment of the mechanism, shown in figure 3. It is to be précised that it is shown a right hand, observed from the palm of the hand. It is clear that the same mechanism can be realized for a left hand, without departing from the aims of the invention.

In the embodiment shown, it is reproduced the functioning of an anthropomorphic robotic hand, provided with four substantially aligned fingers, from the index finger (2) to the little finger (5), and with an opposable finger (1) thereto.

The present invention relates to a particularly robust and efficient embodiment of the mechanism for motion transmission to the four aligned fingers by means of only one motor (M1), as well as to an embodiment of each of these four fingers which allows a fast assembly and disassembly, in addition to a relative positioning as similar as possible to the one of an anthropomorphic hand. Any mechanism for realizing and moving the thumb, among the several ones known per sé at the state of the art can be used without departing from the aims of the invention.

As it is shown in figure 4, the moving mechanism of the four aligned fingers comprises a motor M1 and three differential stages.

In a first example not according to the invention, the train carrier (14) of the first differential stage is moved directly by the motor (M1). This occurs preferably by means of a coupling between worm screw (R1) and crown (T1) of the train carrier. The first differential stage transmits motion by means of the left sun gear (15) to the train carrier (24) of the second differential stage, which moves index finger and middle finger, and by means of the right sun gear (16) to the train carrier (34) of the third differential stage, which moves ring finger and little finger.

It is to be observed that, in the kinematic scheme not according to the invention, the train carrier (14) of the first differential stage is the only gear directly moved by the motor (M1).

In order to optimize the mechanism reliability and dimensions, the left sun gear (15) of the first stage and the train carrier (24) of the second stage are integral to each other. The same occurs for the right sun gear (16) of the first stage which is integral to the train carrier (34) of the third stage. It is to be précised that the sun gears (15, 16) of the first stage being integral to the train carriers (24, 34) of the next stages (instead of connecting them by means of a gear coupling) allows to reduce not only the mechanism dimensions but also its backlash and frictions.

The differential stages are kept at the right relative distance through two spacers (D1) and (D2), respectively interposed between first and the second differential stage and between first and third differential stage. From a constructive point of view, as it is shown in figure 4, the differential stages described so far are preferably bevel gear differential stages.

According to what yet said, motion is transmitted to the substantially aligned fingers by the second and third differential stages. Since they are bevel gear differential stages, with the configuration shown in figure 4, the torque is split by the motor to the 4 fingers in equal manner (25% for each finger).

The embodiment of the differential stages allows, with a simple reconfiguration, to vary the distribution of the motor torque among the various fingers, allowing to connect the two sun gears of a stage alternately to the train carriers of other two bevel gear differential stages, to two idle gears which control the flexion of two fingers or to the train carrier of a bevel gear differential stage and to the idle gear which controls the flexion of the finger.

In this manner, by connecting for example the motor to the second stage instead of to the first one (according to the scheme shown in figure 7), it can be obtained the distribution of the motor torque to the fingers according to the proportions of: 50% for index finger, 25% for middle finger, 12,5% for ring finger and little finger, which is more similar to the real distribution of force of the human hand, and however, which is more useful for the grasping needed to carry out the several activities of the daily life for an amputated subject.

In order to obtain the same result, the document EP3548228 describes the use of bevel gear differential stages with sun gears with different diameters inside the same differential stage (figure 8). Yet, from a constructive point of view, this implies the need to incline the axes of the planet gears, and as a consequence it leads necessarily to greater dimensions and greater constructive difficulties, in addition to the need to have the two halves of the train carrier with a different structure. The modularity of the mechanism proposed here, allows instead to obtain a similar result simply by assembling the same components of the differential stages in a different manner.

The differential train made up of the three stages is contained inside a cylindrical recess suitably obtained in the frame (00), open only on a side to allow the introduction of the differential train, which is then closed with a suitable lid (C1). Between the differential train and the frame, inside the recess it is provided a linear spring (300), while the lid (C1), holed in the middle, has a button (P1) which is free to rotate with respect to the lid (C1) and to translate along the axis of rotation of the differential train. So, by exerting a pressure on the button (P1), all the differential train translates compressing the spring (300) and disengaging the sun gears (25), (26), (35), (36) from the fingers (2), (3), (4) and (5), respectively. So, such safety mechanism constitutes a mechanical release, which the users can use when it is needed to open the hand, but the electronics does not answer correctly.

Before describing the transmission of motion, it is useful to describe the preferred embodiment of each aligned finger. Each finger comprises two phalanges and an appendix, hinged to each other in pairs around a relative axis of rotation. The appendixes of the fingers from index finger to ring finger are hinged to the frame of the hand (00), around a relative axis of rotation (260).

The shape of the components (phalanges, appendixes, frame) is such that the rotation allowed around all the respective axes of rotation is limited to values similar to the physiological ones of the respective components of the human hand.

Without this limiting the aims of the invention, according to a preferred embodiment the substantially aligned fingers (from index finger to little finger), with respect to the basic configuration with completely extended fingers, have the possibility to be flexed between about 85 and 95° for the proximal phalanx, and between about 85 and 95° for the middle-distal phalanx.

It is now described the preferred embodiment of the fingers according to the invention, with reference to the index finger, for simplicity. Except for the clear dimensional differences, the other fingers (middle finger, ring finger, little finger) can be realized in the same way.

The index finger is hinged to the palm of the hand (00) at the axis of rotation (260) relative to the movement of adduction-abduction of the appendix (23) with respect to the frame (00).

The first toothed pulley (212) is positioned at the axis of rotation (240) between proximal phalanx (22) and appendix (23), it is idle with respect to such axis of rotation and one gear integral thereto (2024) engages with the transmission gear (213) with axis of rotation (270) on the appendix (23), which is idle as well with respect to the axis of rotation (270). Such transmission gear (213) engages then with the left sun gear (25) of the second differential stage. This is the coupling which transmits the torque of the motor (M1) to the index finger (2) and, considering the relative sun gears of the other differential stages, to the other fingers.

It is to be considered that, from a constructive point of view, the first toothed pulleys of each of the substantially aligned fingers (212, 312, 412 and 512) are conveniently made up as a whole with the shaft (212, 312, 412 and 512) and integrally assembled to a gear (2024).

The gear (2024) engages with the relative transmission gear (213), while the toothed pulley (212) is connected by means of a toothed belt (211) to the next pulley (210), which has axis coincident with the relative axis of rotation between proximal phalanx (22) and distal phalanx (21).

It is to be considered that, from a constructive point of view, each one of the second toothed pulleys of the substantially aligned fingers (210, 310, 410 and 510) is conveniently integral to the respective distal phalanx (21) by means of the introduction of a key (27), which rests on flat surfaces provided therefor both on the pulley and on the coupling fork (2006) of the distal phalanx (21), avoiding the relative rotation of the second toothed pulley with respect to the distal phalanx (figure 9).

Since the first pulley (212) is idle with respect to the relative axis, the motion of the left sun gear (25) of the second differential stage, while ignoring frictions for simplicity, is directly transmitted through the transmission gear (213) to the pulley (220) integral to the distal phalanx (21) of the index finger, without that the proximal phalanx (22) rotates.

Once the distal phalanx (21) comes in contact with the object to be grasped or reaches the stop, its movement is blocked and the second pulley (220) integral thereto cannot rotate any more relative to the proximal phalanx (22). It is to be specified that the stop of the distal phalanx is determined by physical limits of the forks (2006, 2001), as it is shown in figure 9. Due to the connection by means of the toothed belt (211), now even the first pulley (212) cannot rotate with respect to the proximal phalanx (22), so this last one begins to rotate with respect to the palm. When also the proximal phalanx (22) is blocked by the grasped object (or comes to the stop determined by the physical limits of the fork (2002) and appendix (23) shown in figure 9), the left sun gear (25) of the second differential stage stops, so all the speed of the train carrier (24) is discharged on the right sun gear (26), which transmits movement to the middle finger in an absolutely similar way. If also the middle finger stops (because it comes in contact with the object to be grasped or because all the rotations have reached their stop) even the relative sun gear (26) of the third differential stage cannot rotate, and so, also the relative train carrier (24) stops. Ring finger and little finger function in an absolutely similar way, and they are moved by the third differential stage, respectively by means of the left (35) and right (36) sun gear. When the fingers from index finger to little finger are in contact with the object (or have reached the stop) the motor (M1) is forced to stop.

Preferably, the electronic control board is configured to control the current of the motor (M1), thus determining the maximum torque exerted and, so the maximum torque transmitted to the fingers which determines the grasping force. According to a preferred embodiment, the motor (M1) can be also configured to be controlled by means of an encoder (E1), so to control the speed with which the grasping is performed.

According to a preferred embodiment, the gear integral to the sun gear (25), the transmission gear (213) and the gear integral to the pulley (212) are conveniently shaped as bevel gears, and not as spur gears. This allows to give the index finger (2) a basic position slightly inclined to the middle finger (3) (which, instead, has preferably all spur gears), thus increasing substantially the resemblance of the proposed prosthesis to the human hand. The same occurs for the ring finger (4) and little finger (5). Preferably, the coupling gears of the various fingers are configured so that the index finger (2) is inclined of 5° to the middle finger (3), the ring finger (4) is inclined of 5° to the middle finger (3) but in the opposite direction to the index finger (2), and the little finger (5) is inclined of 10° to the middle finger (3) in the same direction of the ring finger (4). Different values for the relative inclinations between the various fingers can be used without departing from the aims of the invention.

In order to transmit motion in the most possible efficient manner, all the three gears interested by the kinematic chain (for example the gears 25, 213 and 212 in case of index finger) have to be provided with an opening angle of the pitch cone equal to the half of the inclination desired of the finger (taking as example the index finger, such angle has to be 2,5°).

Moreover, in this way, during the flexion movement the index finger (2), ring finger (4) and little finger (5) converge towards the middle finger (3), thus obtaining a greater resemblance to the human hand and making it possible the grasping of thin objects by exploiting the approaching of index finger (2) and middle finger (3) after their flexion, which is a useful grip in many activities of daily life.

This embodiment overcomes also what described in Patent EP3548228 (see figure 5) which uses Cardan joints. What described therein, in addition to be constructively more complex (and so also subjected to a greater possibility of breaking), forces index finger and middle finger to take the same inclination α and ring finger and little finger to take the same inclination β, avoiding that during flexion of these fingers the spaces between index finger and middle finger and between ring finger and little finger are reduced, thus making more complex to grasp thin objects. This does not occur instead with the mechanism proposed in the present Patent, which allows to set a different inclination angle for each finger.

In the following, there are shown further constructive details of a preferred embodiment of a finger, taking the index finger (2) shown in figures 9 and 10, as reference.

The body of the proximal phalanx is made up of four main components, connected to each other by means of suitable pins and bolts; two side forks (2001, 2002) and a central body made up of two portions (2003 and 2004).

The first side fork (2001) shares the axis of rotation (220) with the distal phalanx (21) and the second side fork (2002) share the axis of rotation (240) with the appendix (23). So, to modify the length of the proximal phalanx it is sufficient to modify the length of the central body, i.e. the components (2003) and (2004).

So, the forks (2001, 2002) can be realized in similar way for all the fingers, and this allows to exploit at most the economies of scale linked to the production of such components.

The body of the distal phalanges is instead made up of two main components: a distal fork arranged on a side (2006) and a distal body (2007). The distal fork (2006) shares the axis of rotation (220) with the proximal phalanx (22). The distal body (2007) is shaped similarly to the terminal portion of the human finger. Preferably, to such aim the distal body (2007) comprises a nail and a fingertip (2008) realized by means of a pad in elastomeric material (2008), such as silicone or rubber, in order to increase friction between fingers and grasped objects, in addition to a better adaptation to their shape and dimensions. Preferably, also the proximal phalanx comprises an elastomeric pad (2005) integral to the central body (2003).

The elastomeric pads (2005, 2008) can be connected by means of couplings with screws and threaded holes, so that they can be easily replaced directly by the orthopedic technicians or by the users during the device ordinary maintenance operations. Other kinds of couplings, such for example the coupling by means of suitable restraining or gluing, are possible.

The components constituting the proximal (2001, 2002, 2003, 2004) and distal (2006, 2007) phalanx are integral to each other by means of pins and bolts.

Two belt tighteners (2009 and 2010) are used to increase the torque transmittable by the system, increasing the winding angle of the belt (211) around the pulleys (210) and (212).

The adjustment of the belt tighteners allows also to set the correct operative tensioning of the belt (211), so that this does not slip if subjected to torques equal or lower than the maximum one exertable by the motor M1 and so that this slips if subjected to higher torques (for example due to an outer blow), thus increasing the compliance of the system and the resistance to the outer stresses which could damage it. It is in fact sufficient to increase or decrease the diameter of the belt tighteners used to be able to carry out this adjustment.

Therefore, such mechanism allows to overcome the limits of what described in EP3548288, wherein it is not presented any system to carry out an adjustment of the belt tensioning, so it is not possible to determine a slipping limit which allows to use the finger during the normal operations, when this one is moved by the motor, and to slip when instead the finger is stressed by an outer blow with a force higher than the one which could damage the system.

As it is shown in figure 11, the mechanism of the finger comprises also two linear springs (2011, 2016). The first one (2011) of said springs adjusts the movement between distal phalanx (21) and proximal phalanx (22), while the second one (2016) of said springs adjusts the movement between the proximal phalanx (22) and the appendix (23). In particular, the first spring (2011) is configured to be opposed to the opening of the distal phalanx (21) with respect to the proximal one (22), supporting the motor M1 in the closing step of the fingers, when it is needed more torque to provide a more stable grip, and opposing thereto in the opening step of the same, when it is not requested a high torque, while the second spring (2016) is configured to be opposed to the opening of the proximal phalanx (22) with respect to the appendix (23) and so to the frame (00).

As it is shown in figure 11, the spring (2011) is positioned in a recess obtained in the distal phalanx (21), between a movable slide (2012) and an end obtained on a component of the distal phalanx (21), and during the movement of finger opening it is compressed by means of a cable (2013) which has an end fixed to a pin (2014) provided on the distal phalanx (21) and an end wound around a bolt (2015) provided on the proximal phalanx (22). With the movement the spring (2011) passes from length L2dp to length L1dp: the spring (2011) is not stressed when the distal phalanx (21) is closed with respect to the proximal one (22). When the distal phalanx (21) opens, the distance between the two hooking points of the cable (2013) increases, but since the cable is inextensible, this tends to move the movable slide (2012), which compresses the spring (2011).

The second spring (2016) is instead positioned in a recess obtained in the proximal phalanx (22), between a movable slide (2017) and an end obtained on the central body (2003) of the phalanx, and during the movement of finger opening it is compressed by means of a second cable (2018) which has an end fixed to a pin (2019) provided on the proximal phalanx (22) and an end wound around a bolt (2020) provided on the appendix (23). With the movement, the spring (2016) passes from length L2pp to length L1pp: with the same logics expressed for the spring (2011) the spring (2016) is opposed to the opening of the proximal phalanx (22) with respect to the appendix (23) and so to the frame (00).

It is to be specified that by using different rigidities for the two springs inside each finger, it is possible to determine the closing and opening order of the two phalanges. Moreover, considering how the mechanism is built, the sum of the rigidities of the two springs used for each finger determines an equivalent rigidity for each finger. By using equivalent rigidities different for the various fingers, it is possible to determine the closing and opening order of the same. Moreover, always in order to determine the opening order of the phalanges in the single finger or of the fingers to each other, the torque generated by each spring can be adjusted by screwing or unscrewing the relative bolt, around which the cable is wound, without being needed to disassemble the mechanism. This second modality of adjustment allows to have two adjustment degrees at disposal for each finger, to carry out post-assembly fine adjustments which could be impossible to carry out previously, and which allow to act:
- on the distribution of torque and speed provided between proximal and distal phalanx in each single finger, so that it is always the proximal phalanx which closes first, so to reduce the probabilities that the grasped object is ejected. So, generally, springs with greater rigidity are used on the proximal phalanx and with lower rigidity on the distal phalanx (and/or, equivalently, the springs on the proximal phalanx will be pre-loaded more than the ones on the distal phalanx by screwing the relative bolt);
- on the distribution of torque and speed provided between different fingers, fundamental to decide the closing order of the fingers. In particular, it is important that the first finger which opens is always the index finger, so that the user can use the device for all the grips needed for the actuation of a trigger (for example the actuation of a drill, of a mouse etc.). Considering how the mechanism is designed, in fact, the first finger, which opens, will be the last one which closes, and to avoid that the object slips out of the grip of middle finger, ring finger and little finger, while the index finger actuates the trigger of the object it is important that such fingers open after the index finger. Therefore, springs with lower rigidity will be used on the index finger and with greater rigidity on the other fingers (and/or, equivalently, the springs of the index finger will be pre-loaded less than the ones of the other fingers by screwing the adjustment bolts provided on the index finger).

The provision of the springs is also fundamental to obtain a device which is not under-connected, because since the mechanism is underactuated (one degree of actuation corresponding to the motor M1 and eight degrees of freedom corresponding to the flexion-extensions of the distal and proximal phalanges of the fingers 2, 3, 4 and 5) it is needed to connect in basic position all the degrees of freedom. Moreover, due to the backlash inevitably present on the gear trains, in case of absence of springs, the motor, before moving the fingers, would rotate idly to restore said backlash. In presence of springs, instead, the gears are always brought by the same springs back in a position which implies a null backlash.

So, the just described mechanism allows to overcome the limits of the mechanism described in EP3548228 which allowed only a fine adjustment of the tensioning of the rotoidal springs provided in the joints between phalanges and between proximal phalanx and frame, with the consequent impossibility to manage efficiently the opening order of the distal phalanges with respect to the proximal ones and the closing order of the fingers, fundamental to obtain a correct behavior of the device. Moreover, even the devices described in other documents known at the state of the art do not allow an adjustment of the rigidity of the elastic elements without disassembling the device, thus making it impossible for the orthopedic technician to carry out a fine setting to adapt the functioning to the preferences of each single user.

In the realization scheme described so far, it was assumed that the fingers from 2 to 5 were constituted only by two phalanges (proximal and middle-distal). But the described mechanism is modular, so other n phalanges, constructively similar to the yet described proximal one, can be added to make it more similar to the human hand (3 phalanges instead of 2) or to use the same device in fields other than the prosthetic one (humanoid robotics, bin picking, robotic harvesting, etc.), where the features of compliance and self-compliance of the fingers to the shape and dimensions of the grasped objects remain fundamental.

Figure 12 shows the example of a finger comprising three phalanges. The proximal (22) and distal (21) phalanges are realized similarly to what yet described about the realization of a finger with two phalanges. But between the two of them a middle phalanx (28) is interposed, configured to rotate with respect to the proximal phalanx (22) around the axis of rotation (220). The distal phalanx (21) rotates with respect to the middle phalanx (28) around the axis of rotation (280). The middle phalanx (28) is provided with a tensioning mechanism completely similar to the one described for the proximal phalanx (22).

It is now described an embodiment with fingers with only one phalanx. When it is desired to realize devices with extremely reduced dimensions (for example for children from 6 to 12 years), it would be very complex to reduce the dimensions of the mechanism provided inside the fingers while maintaining an appropriate robustness of the same. An alternative is to use fingers with only one phalanx, thus loosing adaptability but exemplifying greatly the kinematic scheme. In this case, in fact, as it is shown in figure 17 and by taking the index finger as reference, the finger would be constituted by two main components; the fork (2002) with axis of rotation (240) in common with the appendix (23), and the proximal-middle-distal body (2021), integral to the fork by means of a coupling with bolts (2022) or the like.

So, the shaft (212) comprises on the one side a gear which engages with the gear (213) and on the other side it is shaped with a cross profile, which is introduced in a hole with similar profile provided on the fork (2002), thus making them integral to each other. Alternatively, it can be used a coupling with flattened shaft and key or other similar couplings. The motion is then transmitted by the sun gear (25) to the idle gear (213), by this one to the shaft (212) and by the shaft to the fork (2002) by means of the coupling with cross profile. Therefore, the result is the flexion-extension of the whole finger with respect to the frame at their relative axis of rotation (240). A torsion spring (2023) is positioned at the axis (240) and is pre-loaded so to induce the flexion of the only one phalanx of the finger with respect to the appendix.

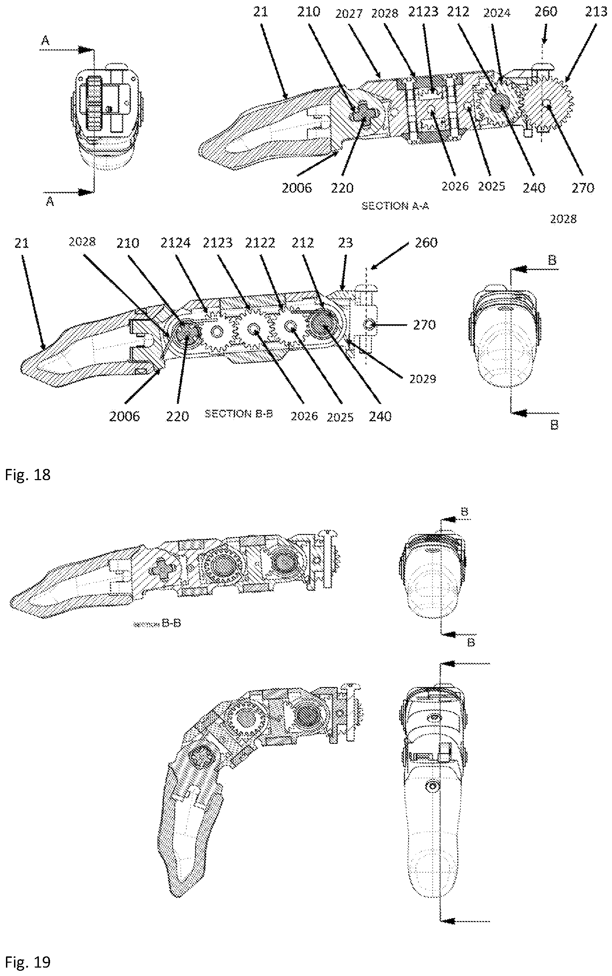

An alternative method for the realization of fingers with two or more phalanges provides the use of a train of idle gears instead of the connection with belt. In particular, it is needed that the train of gears provided inside each phalanx has an odd number of gears, with the first and last gear for each phalanx positioned at the relative axes of rotation between phalanges and the last gear of the train integral to the last phalanx, so that the phalanges keep concordant direction of rotation, i.e. all the phalanges open or close together. Figure 18 shows the scheme of a finger structured in this way. In particular, in this case the shaft 212 is constituted by a gear instead of by a toothed pulley and is connected to the gear (2024) by means of a flat surface. The gear as a whole with the shaft (212) engages then with a second gear (2122) idle with respect to the axis of rotation (2025). Such further gear engages with a third gear (2123) idle with respect to a further axis of rotation (2026) and so on up to the fifth gear integral to the shaft (210) at the axis of rotation (220) between proximal phalanx (22) and distal phalanx (21). Such shaft has on one side a cross profile, which is introduced in a hole with similar profile provided on the fork (2006), thus making them integral to each other. Alternatively, it can be used a coupling with flattened shaft and key or other similar couplings.

Therefore, the motion is transmitted by the sun gear (25) to the gear (213), by this one to the gear (2024) and by this last one to the shaft (212) thanks to the connection with the flat surface. By means of the gear provided on the shaft (212) the motion is then transmitted to the other idle gears constituting portion of the train of gears, up to reach the last gear (210) which moves the distal phalanx (21) by means of the fork (2002).

In this case, the proximal phalanx of the finger is made up of a metal body (2027) and a plastic cover (2028) connected thereto by means of bolts, which insulates the mechanism from outside. The elastic elements are constituted by two torsion springs: the first torsion spring (2029) connects the appendix (23) to the proximal body (2027), while the second torsion spring (2030) connects the proximal body (2027) to the middle-distal phalanx (21) by means of the fork (2006). The preload of the torsion springs (2029, 2030) can be varied by acting on two dowels (2031, 2032), which by being screwed or unscrewed from the body (2027) pre-compress or discharge the springs, thus obtaining the same effects described in the previous paragraphs in case of the transmission with belt and linear springs.

This functioning is particularly clear in figure 18. In section B-B, where as a way of example the second dowel (2032) is shown screwed, so to compress the torsion spring (203) relative to the degree of freedom of rotation between proximal and distal phalanx, while the first dowel (2031) is shown in basic position, not screwed, so it does not add preload to the torsion spring relative to the degree of freedom of rotation between appendix and proximal phalanx.

In order to realize fingers with longer phalanges, in this case it is sufficient to increase the number of gears of the train (always in odd number) or to vary its modules or number of teeth. Such configuration is constructively simpler than the one based on transmission with belts and much more robust.

In this embodiment, however, without varying the type of connection and transmission of motion between the various phalanges, the number of phalanges can be increased as needed, to obtain for example a finger with three phalanges, as it is shown in figure 19.

As yet said, the proximal phalanges are hinged by means of appendixes around the relative axes of rotation with respect to the frame (260, 360, 460, 560), and such connections allow passive degrees of freedom of adduction/abduction of the fingers (2, 3, 4 and 5). Obviously, from a constructive point of view, at such axes there are provided shafts. It is to be noted that such shafts are conveniently made up of bolts (265), which can be screwed and unscrewed without removing any other component of the hand, so that it possible to remove and replace easily the fingers in case of breaking.

But such rotoidal coupling is not sufficient to allow the movement of abduction/adduction of the finger, since for some angles it could lead the gear of the sun gear (25) and the transmission gear (213) in interference.

Therefore, to allow abduction/adduction, the appendixes are not directly in contact with the shaft, but between the appendix and the shaft it is interposed a component realized in elastic material (215) which has a central hole coaxial to the shaft provided at the axis of abduction/adduction (260). This component is visible in figure 13 with reference, as a way of example, to the index finger, and has elongated shape when observed in section, as it is shown in figure 13.

The deformation of the elastic component (215) allows a certain degree of translation of the appendixes with respect to the palm. The combination of the movements of rotation and translation between appendix and bolt, integral to the frame, allows the finger to rotate without that the gears (25) and (213) mesh. In particular, in order to allow the maximum possible rotation of the finger without that the above cited components mesh, in the balance position of the finger the major axis (a) of the component (215) has to be perpendicular to the generating line (b) of the pitch cone of the bevel transmission gear (213). For example, for the index finger, the axis (a) of the component 215 is inclined of 2.5° with respect to the vertical of the middle finger in basic position (see figure 13).

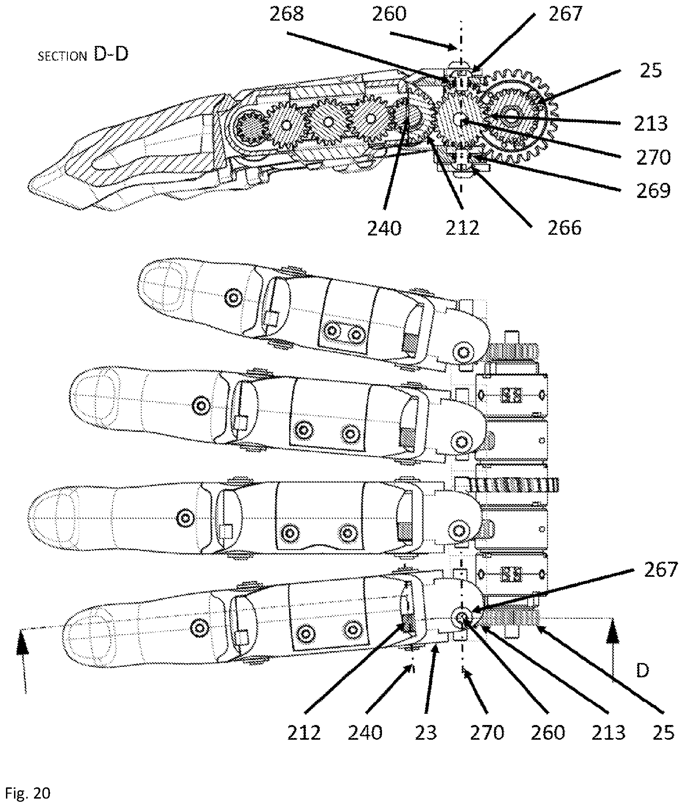

The elastic behavior of the component (215) tends clearly to bring the appendix (23) again to the basic distance from the frame, once the outer stress is ended. An alternative realization method provides the use of spherical gears instead of bevel gears, according to the configuration shown in figure 20. Always with reference to the index finger, in this case the sun gear (25) is constituted by a spherical gear, which engages with the spherical gear (213), idle with respect to the shaft at the axis of rotation (270) on the appendix (23), which in turn engages with the spherical gear (212) integral to the shaft positioned at the axis (240).

The appendix (23) is hinged to the frame by means of two bolts (266, 267) at an axis of rotation (260) perpendicular to the plane of the palm, also perpendicular to the axis of rotation (270) of the spherical gear (213) and passing through the centre of the same.

The use of spherical gears and such relative arrangement of the axes (260) and (270) with respect to such gears allows to guarantee the engagement of the train of gears constituted by the spherical gears (25), (213) and (212) independently of the position of relative rotation between appendix (23) and frame (00).

In suitable recesses obtained on appendix (23) and frame (00), in the space between appendix and frame, a first (268) and a second torsion spring (269) are positioned - installed with axis of action coincident with the axis of rotation (260) of the appendix (23) with respect to the frame (00) - which exert forces with opposite direction, so to bring the finger back in basic position when the outer stress, which tends to rotate it, ends.

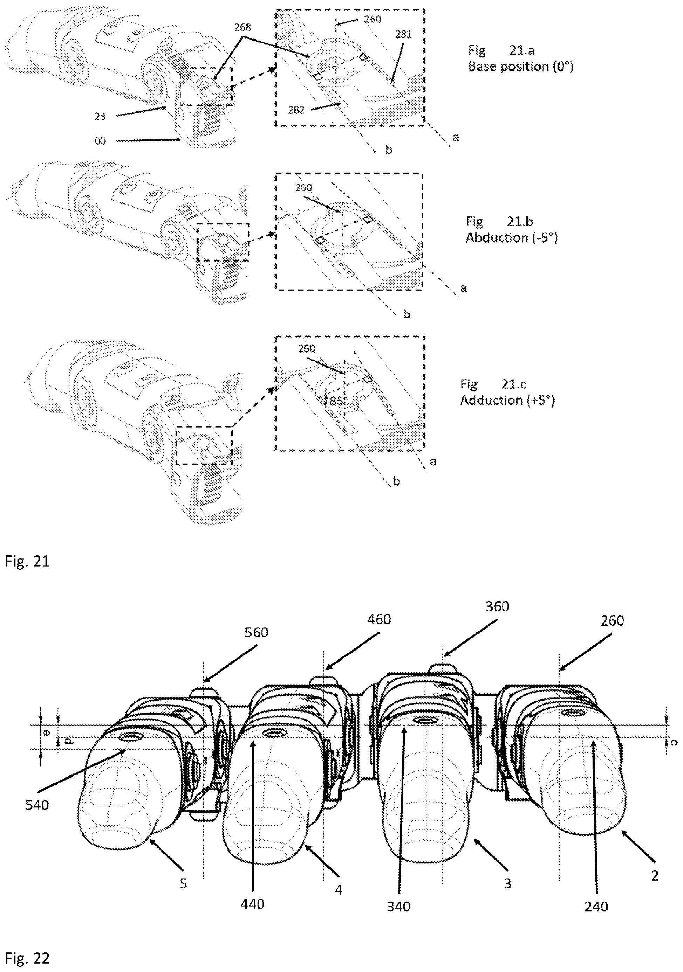

In particular, the first spring (268) is discharged and the second spring (269) is compressed when the finger rotates outwards with an abduction movement, and vice versa the first spring (268) is compressed and the second spring (269) is discharged when the finger rotates inwards with adduction movement. In order that the springs have this behavior, the recesses in which such springs are positioned are shaped as it is shown in figure 21: the recess (281) in the appendix (23) is realized so that, when the finger is in basic position (figure 21.a), the branch (a) of the first spring (268) is in abutment both on the right and on the left of the recess. In other words, the relative motion between said branch (a) of the spring and recess (281) is not allowed. The recess (282) in the frame (00) is instead realized so that the branch (b) of the first spring (268) is in abutment with the frame (00) on the left side but it is free on the right side. In this condition, the two branches of the first spring (268) are parallel, so the spring is at rest and does not exert any force on the index finger.

Figure 21.b shows what happens to the first spring (268) in case of abduction of the finger: the branch (a) of the first torsion spring (268) rotates together with the index finger around the axis (260), and the branch (b) follows the rotation since the recess on the frame (00) allows it; so, the spring is not compressed, and does not generate any force which tends to bring the finger back in basic position.

On the contrary, figure 21.c shows what happens to the first spring (268) in case of adduction of the finger: the branch (a) of the torsion spring (268) rotates together with the index finger around the axis (260), while the branch (b) is already in abutment with the frame (00), so it cannot rotate and this causes the compression of the spring (268), thus generating a force which tends to bring the finger back in the basic position.

The second torsion spring (269) is instead introduced under the finger, always between appendix (23) and frame (00), and it is introduced in recesses obtained in these two components which cause its functioning in the opposite direction: so, such spring (269) exerts a force on the index finger which tends to bring it back in basic position when the same carries out an abduction movement and does not exert any force when the finger is in basic position or carries out an adduction movement.

Instead of the torsion springs, silent blocks or other similar couplings can be used, which allow to obtain the same effect.

The stops of rotation of the appendixes with respect to the frame, obtained by the side abutments of the appendixes (23) against the frame (00) can be set so that the rotation of the fingers is allowed only in one direction (so only abduction or only adduction). In this way, for example, it can be allowed the abduction of index finger and little finger, but not their adduction, and it can be blocked adduction and abduction of middle finger and ring finger. The index finger and little finger are in fact more exposed and so more subjected to undesired stresses which would tend to close them again towards the middle finger. Moreover, such setting of stops avoids that, while grasping heavy objects between index finger and middle finger, the index finger moves away from the middle finger, thus letting the object fall.

Downstream of the spherical gear (212) at the axis (240) the finger can be realized both in the configuration with belt transmission, and in the one with train of idle gears.

Whether one uses bevel gears or spherical gears, the mechanism can be conveniently realized so that there is a misalignment between the fingers in the frontal plane, as it is shown in figure 22 in case of spherical gears. Considering as reference the axis of rotation (340) of the proximal phalanx of the middle finger, the axes (240), (440) and (540) of index finger, ring finger and little finger are translated downwards by the distances (c), (d) and (e), respectively.

This would make the device more anthropomorphic, by making also the grip more similar to the human one, and improving the biomimetics of the device with respect to the human one. Moreover, around the appendix (23), between appendix and frame, it is provided an elastic compressible collar (214), integral to the frame, which allows both to deaden outer blows and to bring the finger back in the basic inclination, once such stresses are ended.

The elastic collar (214) gives also the coupling between fingers and palm water resistance.

Figure 14a shows the index finger not subjected to any stress; figure 14b shows the index finger subjected to a stress which tends to incline it towards the middle finger, thus compressing the elastic element (214) in its left portion up to allow a maximum rotation of +5° (index finger resulting inclination equal to 0°); figure 14c shows the index finger subjected to a stress which tends to incline it moving it away from the middle finger, thus compressing the elastic element (214) in its right portion up to allow a maximum rotation of -5° (index finger resulting inclination equal to -10°).

Figures 15-a, 15-b and 15-c show all the fingers of a left hand observed from the back, respectively stressed leftwards, in balance and stressed rightwards, with an example indication of the maximum angles which can be reached. Such angles can be varied modifying the dimensions of the elastic elements (214, 314, 414, 514).

It is also to be underlined that both the elastic components which allow passive adduction/abduction of the fingers (2, 3, 4 and 5) and the springs provided inside the fingers and previously described have also the aim of deadening the undesired blows on the fingers, thus increasing the compliance of the device and creating a "buffer zone" between the same fingers and the palm, which guarantees a longer duration of the used components. In particular, the elastic elements (215), (315), (415), (515) allow to deaden both blows which tend to flex the fingers and those ones which tend to extend them, unlike it occurs in devices described in other documents known at the state of the art, such as for example WP2021250233A1, WO2020065266A1, WO2022038506A1, which are instead protected only against stresses which tend to close the fingers.

As previously specified, the shafts provided at the axes (260, 360, 460, 560) are constituted by bolts, which can be removed to uncouple the appendixes from the frame and to replace the fingers in case of damaging.

The prostheses of upper limb are not usually designed so that they can be repaired directly by orthopedic technicians, since they have a very complex design. So, the orthopedic technicians have to send the device back to the manufacturing company for any damage, and this fact causes long waiting times for the users and high costs also for the manufacturer, who while repairing the device is forced to send a temporaneous replacement device to the user. The few prostheses which have replaceable fingers, instead, do not have a waterproof design, since it is technically very complex to design a sealing between fingers and palm which functions repeatably downstream of the disassembly and replacement of the fingers by the orthopedic technicians.

The designed mechanism overcomes this limit by means of little gloves (29, 39, 49, 59) - shown in figure 16 for the index finger - realized in elastic material, each configured to cover a respective finger from outside and integrally installed to the appendixes (23) of each finger.

By taking as reference the index finger (2), the water resistance feature is obtained since at the introduction of the appendix (23) in the frame (00), the glove (29) is compressed between the appendix (23) and the elastic collar (214) integral to the frame (00), thus sealing the whole mechanism on the frontal side. The upper and lower side of the hand are instead protected against the penetration of liquids and powders by means of various components of the cover, which have suitable gaskets in the joint points. So, in particular, when a finger is replaced, also the relative little glove is replaced therewith, continuing to keep the waterproof degree without particular operations which would be complex to be carried out by not experts.

Since, also, the fingers are connected to only one motor, when a finger is replaced because damaged it is not needed to disassemble and replace also the motor, thus reducing costs of replacement components.

The use of a worm reduction unit, in addition to provide an extremely compact way to carry out the motor speed reduction/torque increase, is also a not reversible mechanism; by acting on the fingers, such components cannot be re-opened because it is impossible to transmit motion from the train carrier of the first differential stage to the motor M1. So, once the complete closing of the fingers is reached, it is possible to turn off the motor (thus saving battery charge) since the grip remains still stable because the fingers cannot be re-opened passively.

From the cited description of the mechanism, some advantages are clear.

In particular, the functioning is absolutely similar for both the closing movement of the hand and the opening movement of the same, since all the connections used are bidirectional (gears and toothed belts) and no unidirectional elements (tendons, tension rods...) are used, which also have the limit that they cannot exert great forces and that they have higher internal frictions.

Another advantage of using bevel gear differential stages is the independence of the forces exerted by the sun gears from their kimematic position. The bevel gear differential stages are globally force-isotropic, so independently of the kinematic position of the finger they exert a constant force, thus guaranteeing constant performances in the the whole workspace. Such advantage is extended inside the fingers by using belt transmission, characterized by the independence of the forces transmitted by the wheelbase between pulleys and by the relative inclination of phalanges. The same does not occur with other kinds of transmissions, such those ones based on cables, in which the forces exerted show a variable pattern according to the relative inclination of the phalanges.

## Claims

1. Mechanism for moving the four aligned fingers (2, 3, 4, 5) of an anthropomorphic hand, comprising a motor (M1) and three differential stages configured to transmit motion from said motor (M1) to said aligned fingers (2, 3, 4, 5),
wherein :
- said differential stages are bevel gear differential stages, each comprising a train carrier (14, 24, 34) and two sun gears (15, 16, 25, 26, 35, 36);
- said differential stages are arranged so that the axes of rotation of said train carriers (14, 15, 16) are aligned;
- said motor (M1) is configured to move directly the train carrier (14, 24, 34) of one of said differential stages by means of a coupling between a worm screw (R1) on the motor and a crown on the train carrier (14, 24, 34) of one of said differential stages ;
- said differential stages are configured so that at least one of the sun gears of said differential stage moved by the motor M1 is integral to the train carrier of a second differential stage adjacent thereto;
- said differential stages are configured to move said four aligned fingers (2, 3, 4, 5) by means of four of said sun gears (15, 16, 25, 26, 35, 36);
- the sun gear not engaged in the movement of said aligned fingers and not integral to the train carrier of said second differential stage is integral to the train carrier of said third differential stage
**characterised in that**
the differential stage moved by said motor (M1) is a lateral stage of said three aligned differential stages, and **in that**
said lateral differential stage has a sun gear (26) integral to the train carrier (14) of the differential stage adjacent thereto and the other sun gear (25) configured to control the movement of the index finger of said anthropomorphic hand.

2. Anthropomorphic robotic hand comprising a mechanism for moving the four aligned fingers (2, 3, 4, 5) according to claim 1

3. Anthropomorphic robotic hand according to claim 2, further comprising a frame (00) and four aligned fingers, each comprising two phalanges and one appendix hinged to each other in pairs around a relative axis of rotation, said fingers being configured so that the appendixes of the fingers from index finger to ring finger are hinged to said frame (00) at the axis of rotation (260) relative to the movement of adduction-abduction of the appendix (23) with respect to the frame (00).

4. Anthropomorphic robotic hand according to claim 3, **characterized in that** said three differential stages are contained inside a cylindrical recess suitably obtained in the frame (00), open only on one side to allow its introduction, and **in that** said hand comprises also a closing lid (C1) of said recess and **in that** between the differential train and the frame, inside the recess, it is provided a linear spring (300), said spring being configured so that it is compressed after translation of said three differential stages inside said cylindrical recess.

5. Anthropomorphic robotic hand according to claim 4, **characterized in that** said lid (C1) is provided with a central hole and comprises a button (P1) which is free to translate along the axis of rotation of the differential train, configured so that a pressure on said button (P1) makes said three differential stages translate along their own axis, disengaging the sun gears (25), (26), (35), (36) respectively from the fingers (2), (3), (4) and (5) and compressing the spring (300).

6. Anthropomorphic robotic hand according to one of claims 3 to 5, **characterized in that** it further comprises a plurality of elastic elements (214, 314, 414, 514) interposed between appendixes and frame in order to deaden potential blows received by said fingers (2,3,4 and 5).

7. Anthropomorphic robotic hand according to one of claims 3 to 6, further comprising a palm and **characterized in that** it further comprises elastic elements (215, 315, 415, 515) interposed between the frame (00) and the appendixes, configured to deform elastically and to allow a translation of the appendixes with respect to the palm.

8. Anthropomorphic robotic hand according to one of claims 3 to 7, **characterized in that** each of said fingers comprises a first toothed pulley (212) positioned at the axis of rotation (240) between proximal phalanx (22) and appendix (23), idle with respect to such axis of rotation, and a gear integral thereto (2024) engages with a transmission gear (213) idle with respect to the an axis of rotation (270) on the appendix (23) and configured to engage with a sun gear (25) of one of said differential stages, so that said sun gear can transmit the torque deriving from said motor (M1) to said transmission gear (213).

9. Anthropomorphic robotic hand according to claim 8, **characterized in that** said first toothed pulleys of each of said aligned fingers (212, 312, 412, 512) are constituted by one toothed pulley, realized as a whole with the respective shaft (212, 312, 412 and 512), integrally mounted to a gear (2024), said gear being configured to engage with the relative transmission gear (213), said toothed pulley being connected by means of a toothed belt (211) to a following pulley (210), having axis of rotation (220) coincident with the relative axis of rotation between proximal phalanx (22) and distal phalanx (21).

10. Anthropomorphic robotic hand according to one of claims 3 to 9, further comprising a finger corresponding to the thumb (I), a metacarpus and a relative actuation mechanism.

11. Anthropomorphic robotic hand according to one of claims 3 to 10, further comprising a control electronic board configured to receive in input control signals by the user and to control said motor M1 as a function of said control signals.

12. Anthropomorphic robotic hand according to one of claims 8 to 11, **characterized in that** the toothed pulleys coupling the various fingers to the frame are configured so that the index finger (2) is inclined of 5° to the middle finger (3), the ring finger (4) is inclined of 5° to the middle finger (3) but in the opposite direction to the index finger (2), and the little finger (5) is inclined of 10° to the middle finger (3) in the same direction of the ring finger (4).

13. Anthropomorphic robotic hand according to one of claims 3 to 12, further comprising a plurality of gloves (29, 39, 49, 59) realized in elastic material, each configured to cover a respective finger from outside and integrally installed to the appendixes (23) of each finger, said gloves (29, 39, 49, 59) being installed so that when the appendix (23) is introduced in the frame (00), the glove (29) is compressed between the appendix (23) and an elastic collar (214) integral to the frame (00), thus sealing the whole mechanism on the frontal side.

14. Anthropomorphic robotic hand according to one of claims 3 to 13, **characterized in that** the phalanges inside each finger are moved, each one with respect to the adjacent phalanx, by means of a train of idle gears, in odd number, with the first and the last gear of said train of gears positioned at the relative axis of rotation between phalanges, and the last gear of the train integral to the last phalanx.

15. Anthropomorphic robotic hand according to one of claims 3 to 14, **characterized in that** said sun gears (15, 16, 25, 26, 35, 36) by means of which said differential stages move said four aligned fingers (2, 3, 4, 5) are spherical gears, and engage with the respective spherical gears (213), idle with respect to their own shaft, installed at said axis of rotation (270) on the appendix, the appendix (23) being also hinged to the frame at an axis of rotation (260) perpendicular to said axis of rotation (270).

## Patentansprüche

1. Mechanismus zur Bewegung der vier ausgerichteten Finger (2, 3, 4, 5) einer anthropomorphen Hand, bestehend aus einem Motor (M1) und aus drei Differentialstufen, die konfiguriert sind, um eine Bewegung vom Motor (M1) auf die ausgerichteten Finger (2, 3, 4, 5) zu übertragen, wobei:
- die Differentialstufen sind Kegelraddifferentialstufen, die jeweils einen Zahnradträger (14, 24, 34) und zwei Sonnenräder (15, 16, 25, 26, 35, 36) umfassen;
- die Differenzialstufen sind so angeordnet, dass die Drehachsen der Zahnradträger (14, 15, 16) fluchten;
- der Motor (M1) ist so konfiguriert, dass er den Zahnradträger (14, 24, 34) eines der Differenzialstufen mittels einer Kupplung zwischen einem Schneckenrad (R1) am Motor und einem Hohlrad am Zahnradträger (14, 24, 34) eines der Differenzialstufen direkt bewegt;
- die Differenzialstufen sind so konfiguriert, dass mindestens eines der Sonnenräder der von Motor M1 angetriebenen Differenzialstufe mit dem Zahnradträger einer benachbarten zweiten Differenzialstufe verbunden ist;
- die Differenzialstufen sind so konfiguriert, dass sie die vier ausgerichteten Finger (2, 3, 4, 5) mittels vier der Sonnenräder (15, 16, 25, 26, 35, 36) bewegen;
- das Sonnenrad, das nicht von der Bewegung der ausgerichteten Finger angetrieben wird und nicht mit dem Zahnradträger der zweiten Differenzialstufe verbunden ist, ist mit dem Zahnradträger der dritten Differenzialstufe verbunden
**dadurch gekennzeichnet, dass**
die von Motor (M1) angetriebene Differenzialstufe eine Seitenstufe der drei ausgerichteten Differenzialstufen ist und dass diese Seitenstufe ein Sonnenrad (26) aufweist, das mit dem Zahnradträger (14) der benachbarten Differenzialstufe verbunden ist, und das andere Sonnenrad (25) ist so konfiguriert, dass es die Bewegung des Zeigefingers der anthropomorphen Hand steuert.

2. Anthropomorphe Roboterhand mit einem Mechanismus zum Bewegen der vier ausgerichteten Finger (2, 3, 4, 5) gemäß Anspruch 1.

3. Anthropomorphe Roboterhand nach Anspruch 2, ferner umfassend einen Rahmen (00) und vier ausgerichtete Finger, von denen jeder zwei Phalangen und einen Fortsatz aufweist, die paarweise um eine relative Drehachse gelenkig verbunden sind, wobei die Finger sind so konfiguriert, dass die Fortsätze der Finger, vom Zeigefinger bis zum Ringfinger, an der Drehachse (260) relativ zur Adduktions-Abduktionsbewegung des Fortsatzes (23) zum Rahmen (00) gelenkig verbunden sind.

4. Anthropomorphe Roboterhand nach Anspruch 3, **dadurch gekennzeichnet, dass** die drei Differentialstufen in einer zylindrischen Ausnehmung untergebracht sind, die in geeigneter Weise im Rahmen (00) ausgebildet ist und nur an einer Seite zum seinem Einsetzen offen ist, und dass die Hand außerdem einen Verschlussdeckel (Cl) für die Ausnehmung aufweist, und dass zwischen der Differentialstufe und dem Rahmen, innerhalb der Ausnehmung, eine lineare Feder (300) angeordnet ist, die so konfiguriert ist, dass sie sich nach einer Translation der drei Differentialstufen innerhalb der zylindrischen Ausnehmung zusammendrückt.

5. Anthropomorphe Roboterhand nach Anspruch 4, **dadurch gekennzeichnet, dass** der Deckel (Cl) mit einer zentralen Bohrung versehen ist und einen Knopf (P1) aufweist, der sich frei entlang der Drehachse der Differentialstufe bewegen kann und so konfiguriert ist, dass ein Druck auf den Knopf (Pl) eine Translation der drei Differentialstufen um ihre eigene Achse bewirkt, wodurch jeweils die Sonnenräder (25), (26), (35), (36) von den Fingern (2), (3), (4) und (5) ausgekuppelt und die Feder (300) zusammengedrückt wird.

6. Anthropomorphe Roboterhand nach einem der Ansprüche 3 bis 5, **dadurch gekennzeichnet, dass** sie ferner mehrere elastische Elemente (214, 314, 414, 514) umfasst, die zwischen den Elementen relativ zur Rotation zwischen den Fortsätzen und dem Rahmen angeordnet sind, um mögliche von den Fingern (2, 3, 4 und 5) empfangenen Stöße abzufedern.

7. Anthropomorphe Roboterhand nach einem der Ansprüche 3 bis 6, ferner umfassend eine Handfläche, und **dadurch gekennzeichnet, dass** sie ferner elastische Elemente (215, 315, 415, 515) umfasst, die zwischen dem Rahmen (00) und den Fortsätzen angeordnet und so konfiguriert sind, dass sie sich elastisch verformen und eine Translation der Fortsätze relativ zur Handfläche ermöglichen.

8. Anthropomorphe Roboterhand nach einem der Ansprüche 3 bis 7, **dadurch gekennzeichnet, dass** jeder der Finger eine erste Zahnriemenscheibe (212) umfasst, die auf der Drehachse (240) zwischen einer proximalen Phalanx (22) und einem Fortsatz (23) angeordnet und relativ zu dieser Drehachse unbeweglich ist, sowie ein daran befestigtes Zahnrad (2024), das mit einem Getriebezahnrad (213) kämmt, welches relativ zu einer Drehachse (270) am Fortsatz (23) unbeweglich ist und mit einem Sonnenrad (25) einer der Differenzialstufen kämmt, sodass das Sonnenrad das Drehmoment des Motors (M1) auf das Getriebezahnrad (213) übertragen kann.

9. Anthropomorphe Roboterhand nach Anspruch 8, **dadurch gekennzeichnet, dass** die ersten Zahnriemenscheiben jedes der ausgerichteten Finger (212, 312, 412, 512) aus einer einzigen Zahnriemenscheibe bestehen, die einteilig mit der jeweiligen Welle (212, 312, 412 und 512) gefertigt und fest auf einem Zahnrad (2024) montiert ist, wobei dieses Zahnrad so konfiguriert ist, dass es mit dem zugehörigen Getriebezahnrad (213) in Eingriff steht, wobei die Zahnriemenscheibe über einen Zahnriemen (211) mit einer nachfolgenden Riemenscheibe (210) verbunden ist, deren Drehachse (220) mit der relativen Drehachse zwischen einer proximalen Phalanx (22) und einer distalen Phalanx (21) übereinstimmt.

10. Anthropomorphe Roboterhand nach einem der Ansprüche 3 bis 9, ferner umfassend einen dem Daumen (1) entsprechenden Finger, einen Mittelhandknochen und einen zugehörigen Betätigungsmechanismus.

11. Anthropomorphe Roboterhand nach einem der Ansprüche 3 bis 10, ferner umfassend eine elektronische Steuereinheit, die so konfiguriert ist, dass sie Benutzersteuersignale als Eingabe empfängt und den Motor M1 entsprechend diesen Steuersignalen steuert.

12. Anthropomorphe Roboterhand nach einem der Ansprüche 8 bis 11, **dadurch gekennzeichnet, dass** die Zahnriemenscheiben die die verschiedenen Finger mit dem Rahmen verbinden, so konfiguriert sind, dass der Zeigefinger (2) um 5° gegenüber dem Mittelfinger (3) geneigt ist, der Ringfinger (4) um 5° gegenüber dem Mittelfinger (3) geneigt ist, jedoch in die entgegengesetzte Richtung des Zeigefingers (2), und der kleine Finger (5) um 10° gegenüber dem Ringfinger (4) geneigt ist.

13. Anthropomorphe Roboterhand nach einem der Ansprüche 3 bis 12, ferner umfassend mehrere Handschuhe (29, 39, 49, 59) aus elastischem Material, die jeweils einen Finger von außen bedecken und vollständig an den Fortsätzen (23) angebracht sind, wobei die Handschuhe (29, 39, 49, 59) sind so angebracht, dass beim Einführen des Fortsatzes (23) in den Rahmen (00) der Handschuh (29) zwischen dem Fortsatz (23) und einem in den Rahmen (00) integrierten elastischen Kragen (214) zusammengedrückt wird und somit den gesamten Mechanismus an der Vorderseite abdichtet.

14. Anthropomorphe Roboterhand nach einem der Ansprüche 3 bis 13, **dadurch gekennzeichnet, dass** die inneren Phalangen jedes Fingers relativ zur jeweils benachbarten Phalanx mittels einer ungeraden Anzahl von inaktiven Zahnrädern bewegt werden, wobei das erste und das letzte Zahnrad des Getriebezahnrades auf der relativen Drehachse zwischen den Phalangen angeordnet sind und das letzte Zahnrad des Getriebezahnrades einen integralen Bestandteil des letzten Phalanx bildet.

15. Anthropomorphe Roboterhand nach einem der Ansprüche 3 bis 14, **dadurch gekennzeichnet, dass** die Sonnenräder (15, 16, 25, 26, 35, 36), mit denen die Differentialstufen die vier ausgerichteten Finger (2, 3, 4, 5) bewegen, Kugelzahnräder sind und mit den jeweiligen Kugelzahnrädern (213) kämmen, die bezüglich ihrer eigenen Welle unbeweglich sind und bei der Drehachse (270) auf dem Fortsatz angebracht sind, wobei der Fortsatz (23) auch auf einer zur Drehachse (270) senkrechten Drehachse (260) mit dem Rahmen gelenkig verbunden ist.

## Revendications

1. Mécanisme de déplacement des quatre doigts alignés (2, 3, 4, 5) d'une main anthropomorphe, comprenant un moteur (M1) et trois étages différentiels configurés pour transmettre un mouvement dudit moteur (M1) auxdits doigts alignés (2, 3, 4, 5), dans lequel :
- lesdits étages différentiels sont des étages différentiels à engrenages coniques, chacun comprenant un porte-engrenages (14, 24, 34) et deux engrenages solaires (15, 16, 25, 26, 35, 36) ;
- lesdits étages différentiels sont agencés de sorte que les axes de rotation desdits porte-engrenages (14, 15, 16) soient alignés;
- ledit moteur (M1) est configuré pour déplacer directement le porte-engrenages (14, 24, 34) de l'un desdits étages différentiels au moyen d'un accouplement entre une vis sans fin (R1) sur le moteur et une couronne sur le porte-engrenages (14, 24, 34) de l'un desdits étages différentiels ;
- lesdits étages différentiels sont configurés de sorte qu'au moins un des engrenages solaires dudit étage différentiel entraîné par le moteur M1 soit solidaire du porte-engrenages d'un deuxième étage différentiel adjacent à celui-ci;
- lesdits étages différentiels sont configurés pour déplacer lesdits quatre doigts alignés (2, 3, 4, 5) au moyen de quatre desdits engrenages solaires (15, 16, 25, 26, 35, 36) ;
- l'engrenage solaire qui n'est pas entraîné dans le mouvement desdits doigts alignés et qui n'est pas solidaire du porte-engrenages dudit deuxième étage différentiel est solidaire du porte-engrenages dudit troisième étage différentiel
**caractérisé en ce que**
l'étage différentiel déplacé par ledit moteur (M1) est un étage latéral desdits trois étages différentiels alignés, et **en ce que** ledit étage différentiel latéral présente un engrenage solaire (26) solidaire du porte-engrenages (14) de l'étage différentiel adjacent à celui-ci et l'autre engrenage solaire (25) est configuré pour commander le mouvement du doigt index de ladite main anthropomorphe.

2. Main robotique anthropomorphe comprenant un mécanisme pour déplacer les quatre doigts alignés (2, 3, 4, 5) selon la revendication 1.

3. Main robotique anthropomorphe selon la revendication 2, comprenant en outre un cadre (00) et quatre doigts alignés, chacun comprenant deux phalanges et un appendice articulés mutuellement deux à deux autour d'un axe de rotation relatif, lesdits doigts étant configurés de sorte que les appendices des doigts, de l'index à l'annulaire, soient articulés audit cadre (00) au niveau de l'axe de rotation (260) relatif au mouvement d'adduction-abduction de l'appendice (23) par rapport au cadre (00).

4. Main robotique anthropomorphe selon la revendication 3, **caractérisée en ce que** lesdits trois étages différentiels sont contenus dans un logement cylindrique convenablement ménagé dans le cadre (00), ouvert d'un seul côté pour permettre son insertion, et **en ce que** ladite main comprend également un couvercle de fermeture (Cl) dudit logement et **en ce que**, entre le train différentiel et le cadre, à l'intérieur du logement, est disposé un ressort linéaire (300), ledit ressort étant configuré de manière à se comprimer après une translation desdits trois étages différentiels à l'intérieur dudit logement cylindrique.

5. Main robotique anthropomorphe selon la revendication 4, **caractérisée en ce que** ledit couvercle (Cl) est muni d'un trou central et comprend un bouton (Pl) qui peut se déplacer librement le long de l'axe de rotation du train différentiel, configuré de telle sorte qu'une pression sur ledit bouton (Pl) provoque la translation desdits trois étages différentiels le long de leur propre axe, désengageant respectivement les engrenages solaires (25), (26), (35), (36) des doigts (2), (3), (4) et (5) et comprimant le ressort (300).

6. Main robotique anthropomorphe selon l'une des revendications 3 à 5, **caractérisée en ce qu'**elle comprend en outre une pluralité d'éléments élastiques (214, 314, 414, 514) interposés entre les éléments en rotation relative entre les appendices et le cadre, afin d'atténuer des coups potentiels reçus par lesdits doigts (2, 3, 4 et 5).

7. Main robotique anthropomorphe selon l'une des revendications 3 à 6, comprenant en outre une paume et **caractérisée en ce qu'**elle comprend en outre des éléments élastiques (215, 315, 415, 515) interposés entre le cadre (00) et les appendices, configurés pour se déformer élastiquement et permettre une translation des appendices par rapport à la paume.

8. Main robotique anthropomorphe selon l'une des revendications 3 à 7, **caractérisée en ce que** chacun des doigts comprend une première poulie dentée (212) positionnée sur l'axe de rotation (240) entre une phalange proximale (22) et l'appendice (23), immobile par rapport à cet axe de rotation, et un engrenage (2024) solidaire à celle-ci, qui s'engage avec un engrenage de transmission (213) immobile par rapport à un axe de rotation (270) sur l'appendice (23) et configuré pour s'engager avec un engrenage solaire (25) de l'un desdits étages différentiels, de sorte que ledit engrenage solaire puisse transmettre le couple provenant dudit moteur (M1) audit engrenage de transmission (213).

9. Main robotique anthropomorphe selon la revendication 8, **caractérisée en ce que** lesdites premières poulies dentées de chacun desdits doigts alignés (212, 312, 412, 512) sont constituées d'une seule poulie dentée, réalisée d'un seul tenant avec l'arbre respectif (212, 312, 412 et 512), montée solidairement sur un engrenage (2024), ledit engrenage étant configuré pour s'engager avec l'engrenage de transmission relatif (213), ladite poulie dentée étant reliée par une courroie dentée (211) à une poulie suivante (210), dont l'axe de rotation (220) coïncide avec l'axe de rotation relatif entre une phalange proximale (22) et une phalange distale (21).

10. Main robotique anthropomorphe selon l'une des revendications 3 à 9, comprenant en outre un doigt correspondant au pouce (1), un métacarpe et un mécanisme d'actionnement relatif.

11. Main robotique anthropomorphe selon l'une des revendications 3 à 10, comprenant en outre une carte électronique de commande configurée pour recevoir en entrée des signaux de commande de l'utilisateur et pour commander ledit moteur Ml en fonction desdits signaux de commande.

12. Main robotique anthropomorphe selon l'une des revendications 8 à 11, **caractérisée en ce que** les poulies dentées reliant les différents doigts au cadre sont configurées de sorte que l'index (2) soit incliné de 5° par rapport au majeur (3), l'annulaire (4) soit incliné de 5° par rapport au majeur (3) mais dans la direction opposée à celle de l'index (2), et le mineur (5) soit incliné de 10° par rapport à l'annulaire (4).

13. Main robotique anthropomorphe selon l'une des revendications 3 à 12, comprenant en outre une pluralité de gants (29, 39, 49, 59) réalisés en matériau élastique, chacun configuré pour recouvrir un doigt respectif de l'extérieur et installé intégralement sur les appendices (23) de chaque doigt, lesdits gants (29, 39, 49, 59) étant installés de telle sorte que lorsque l'appendice (23) est introduit dans le cadre (00), le gant (29) est comprimé entre l'appendice (23) et un collier élastique (214) intégré au cadre (00), scellant ainsi l'ensemble du mécanisme sur la face avant.

14. Main robotique anthropomorphe selon l'une des revendications 3 à 13, **caractérisé en ce que** les phalanges internes de chaque doigt sont déplacées, chacune par rapport à la phalange adjacente, au moyen d'une chaîne d'engrenages inactifs, en nombre impair, avec le premier et le dernier engrenage dudit train d'engrenages positionnés sur l'axe de rotation relatif entre les phalanges, et le dernier engrenage du train faisant partie intégrante de la dernière phalange.

15. Main robotique anthropomorphe selon l'une des revendications 3 à 14, **caractérisée en ce que** lesdits engrenages solaires (15, 16, 25, 26, 35, 36) au moyen desquels lesdits étages différentiels déplacent lesdits quatre doigts alignés (2, 3, 4, 5) sont des engrenages sphériques, et s'engagent avec les engrenages sphériques respectifs (213), immobiles par rapport à leur propre arbre, installés sur ledit axe de rotation (270) sur l'appendice, l'appendice (23) étant également articulé au cadre sur un axe de rotation (260) perpendiculaire audit axe de rotation (270).
